# EUROPEAN PATENT APPLICATION

(11) **EP 1 211 651 A2**
(43) Date of publication of application: **05.06.2002**
(21) Application number: 01400645.6
(22) Date of filing: 12.03.2001
(51) Int. Cl.: G07F 7/00, G03G 15/00, G06F 17/60, B41J 11/00

(54) **System for generating data on the usage of a printer device**

(30) Priority: 10.11.2000 US 710556
(71) Applicant: Promatek Industries Ltd., Montreal, Quebec H4P 2C9 (CA)
(72) Inventor: Levine, Mark, Côte St-Luc, Québec H4V 2X7 (CA)
(74) Representative: Rinuy, Santarelli

(57) **Abstract**

The invention provides a system that has an input for receiving an input signal containing document print information. The document print information is of the type that, when supplied to a printer device, will cause the printer device to print multiple specimens of a document that can be a single page or several pages. The system includes a processing unit that processes the input signal to derive from the print information the number of document specimens that will be generated by the printer device. On the basis of the value X-Y, the processing unit generates usage data, which provides information on the usage of the printer device. Such usage data can be employed for different purposes, examples of which include billing and also printer device usage analysis. The variable X is the number of document specimens that will be generated by the printer, while the variable Y is a positive integer greater than zero.

## Description

### FIELD OF THE INVENTION

The present invention relates to a system for generating usage data regarding the use of a printer device. In particular, the system is characterized by the ability of processing a signal containing document print information that, when directed to a printer device, will result in the printer device printing multiple specimens of a document. The system derives from the document print information the number of specimens of the document that will be printed and then generates the usage data accordingly. In a different aspect, the invention provides a print data processing device capable to determine by analyzing a signal containing print data the number of specimens of a document that will be generated by a printer device when the signal is directed to the printer device.

### BACKGROUND OF THE INVENTION

Many professional organizations have a fee schedule structured to account for a variety of disbursements incurred on behalf of clients. Photocopy charges, facsimile and postal meter expenses are typical disbursements that are allocated to client accounts. Keeping a precise record of those charges is a difficult challenge because the transactions conducted on the photocopier, facsimile or postage meter are numerous. Yet, this task is an essential one in order to avoid loss or revenue due to improper allocation of costs.

Electronic disbursement tracking is a solution adopted by many professional organizations. Under this approach, an electronic controller is interfaced with every photocopier, facsimile machine or postage meter. The controller has a keyboard for entering data and commands, and a screen to display information. In order to gain access to the device on which disbursements are incurred, a user is required to enter an individual identification code followed by a client file number. When this procedure is completed, the controller checks the data for accuracy, namely if the personal identification code and the client file number are valid identifiers. In the affirmative, the controller enables the device to operate. During the transaction, the controller computes the disbursement and electronically posts the data to the particular client account.

The current generation of electronic disbursement tracking for photocopiers are becoming obsolete since the professional service industry is transitioning from printing originals on a printer device and making additional specimens on a photocopier to make multiple sets, to printing all originals and additional specimens at the same time on newer, higher speed and generally higher performance printer devices. The common standard in North America has been to charge clients for all or at least some pages copied but not to charge for originals printed. Therefore, simply tracking the number of pages printed on a printer device is not enough to satisfy the industry.

### SUMMARY OF THE INVENTION

In one aspect, the invention provides a system that has an input for receiving an input signal representative of the number of specimens of a document a user desires to generate on a printer device. In a specific, non-limiting example of implementation, the input signal conveys document print information of the type that, when supplied to a printer device, will result in the printer device printing multiple specimens of a document that can be a single page or several pages. The system includes a processing unit that processes the input signal to derive from the print information the number of document specimens that will be generated by the printer device. At least in part on the basis of the value X - Y, the processing unit generates usage data that provides information on the usage of the printer device. Such usage data can be employed for different purposes, examples of which include billing and printer device usage analysis. These are only examples, other applications of the usage data being possible without departing from the spirit of the invention. Once the usage data is computed, it is released for any further processing, if such processing is required. In this specification, "released" should be interpreted broadly to mean basically made available for further use or processing.

The variable X is the number of document specimens that will be generated by the printer, while the variable Y is a positive integer greater than zero.

The advantage of the system is that it can make a distinction between originals and additional copies in a case where all the specimens of the document are printed on the same printing device.

In a specific example of implementation, the system is software implemented and residing on a computing device such as a workstation, at which the application in which the document is created resides. When a print command is issued by the application, the processing unit receives the print command at one input. In particular, the processing unit is provided with a redirector unit that is responsible for intercepting document print information issued by the application and the components of the operating system responsible to carry out the printing operation. The redirector unit passes the document print information to a document print information analysis unit that spools the print data contained in the document print information to create a print job file. The document print information analysis unit will then examine the entries in the print job file and create for each one of the document pages a data structure that can distinguish the contents of the page from the contents of other pages. Next, the data structures are compared to one another to determine if there is a match in which case multiple specimens of the same document are present.

For the purpose of this specification, the expression a "signal containing document print information", or any equivalent phraseology, implies a signal that can be directly processed by a printing device to generate a document or a signal that is supplied to a print processor for some form of processing before being directed to the printing device. For example, the print processor can be a print spooler and the processing may be re-formatting the signal such that the signal is transformed from one form to another.

Another possible method for deriving the number of specimens present in the document print information is to use auto-correlation algorithms.

After determining the number of specimens present in the printer document information, the usage data is computed at least on the basis of X - Y and also on the basis of the number of pages per specimen. The value of Y can be set as desired to any positive integer greater than 0. Typically, Y is set to 1, however it can be set to any desired higher integer value, such as 2, 3 or 4. Hence, in a specific non-limiting example of implementation, where the usage data is employed for the purposes of billing, a formula for generating the usage data could be based on a policy where the client is charged for all pages being printed except the pages in the original. In such case, the formula becomes (X - Y) * P, where the letter P designates the number of pages per specimen. Once the usage data is computed, either in terms of number of pages to be billed, currency amount or any other appropriate format, it is released for any further processing, if such processing is required.

In a specific, non-limiting example, the usage data can be recorded in a database and used later for the generation of an invoice.

For clarity, the expression "usage data" is intended to designate any kind of data that has been derived at least in part from the expression X - Y and that is representative of the usage of the printer device.

For applications where the usage data is employed to generate a bill or invoice, the processing unit includes an additional unit for receiving expense allocation data such as name or identifier of the client to whom the charge will be attributed, and/or details about the individual that has incurred the charge. In a specific non-limiting example, the expense allocation data is a combination of several data elements, namely:
1. User identification code;
2. User password
3. Name of client
4. Client matter

The operator enters the expense allocation data through an interface. Under this specific example, the processing unit creates a data capture dialog box or screen on the display of the workstation where the user is required to key in the data. Once the data entry process is completed, the processing unit will validate the expense allocation data. The validation process involves checking the data to determine if it is valid or legitimate. In the affirmative, the processing unit will enable the printer device to print when receiving the document print information. Under this example, the printing operation will proceed only if the expense allocation data is properly validated by the system.

In one possible variant, the input signal is separate from the document print information that is sent to the printer device. For example, the system is designed with the capability of presenting the user with a dialog box where the user is requested to enter the number of specimens of a document for which an invoice is to be generated. Accordingly, in this realization, the value X-Y is directly conveyed to the system in the input signal rather than being derived from examination of the document print information. One possible option to this variant is to request from the user, in addition to the number of specimens to be billed, the number of pages per specimen. Yet, another possibility is to examine the document print information such as to derive the number of pages that are being printed at the printer device.

In a further aspect the invention provides a print data processing device, comprising an input for receiving an input signal containing print data suitable for processing by a printer device that will result in the printing device printing X specimens of a document that can be a single or a multi-page document. The print data includes data blocks associated with respective pages of the document, the data blocks recurring a number times. The print data processing device includes a print data analysis unit coupled to the input and being operative for deriving from the input signal the value X. The print data processing device has an output coupled to the print data analysis unit for releasing an output signal conveying the value X.

### BRIEF DESCRIPTION OF THE DRAWINGS

Figure 1 is a block diagram of a typical network arrangement using a printing device;
Figure 2 is a reproduction of a typical Windows95 (trademark) print dialog box;
Figure 3 is a simplified representation of the message structure for exchanging print information between a workstation and a collate capable printer. A collate capable printer is defined as a printer that has a specific instruction causing the printer to generate a multi-page document X number of times, in other words, to produce X specimens of a multi-page document, each specimen produced in the proper page sequence for the multi-page document;

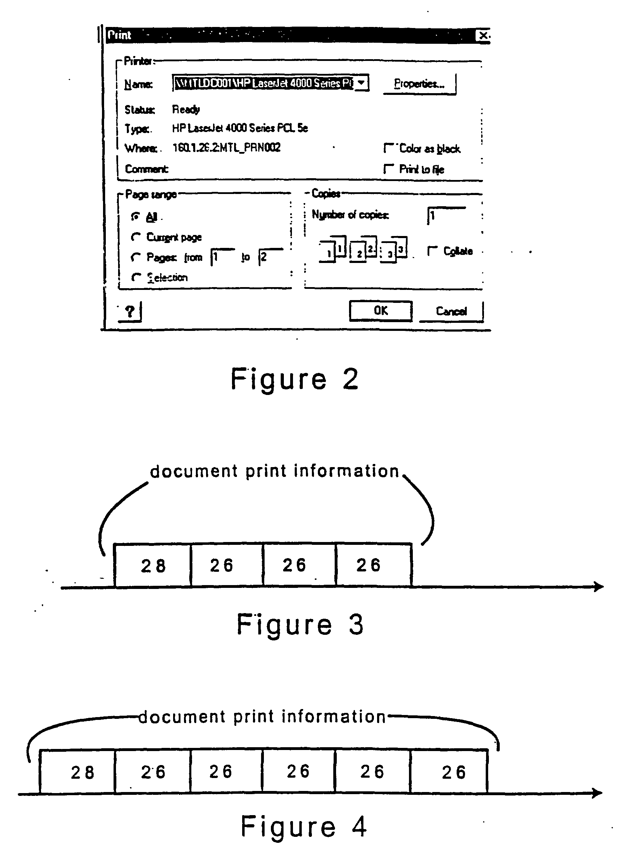

Figure 4 is a simplified representation of the message structure for exchanging print information between a workstation and a non-collate capable printer. A non-collate capable printer is defined as a printer that has a specific instruction allowing the printer to generate successively X copies of a single page. For a multi-page document, a non-collate capable printer will generate X copies of each page of the multi-page document, whereby, once printing is complete, the pages have to be manually re-organized to form X specimens of the multi-page document. This is different from the ability to generate X specimens of the multi-page document while printing, each specimen produced in the proper page sequence;
Figure 5 is a functional block diagram of an expense management system in accordance with the present invention;
Figure 6 is a functional block diagram of a document print information analyzer unit;
Figure 7 is a diagram that illustrates the events occurring when a 32 bit Windows95 application or Windows95 print spooler is printing a spool file with the expense management system resident;
Figure 8 is a diagram that illustrates the events occurring when A 32-bit Windows95 application is printing with the expense management system resident;
Figure 9 is a diagram that illustrates the events occurring when A 16-bit application running on Windows95is printing with the expense management system resident; and
Figure 10 is a block diagram of a computing device forming a suitable platform for the software implementation of the expense management system in accordance with the invention.

### DETAILED DESCRIPTION

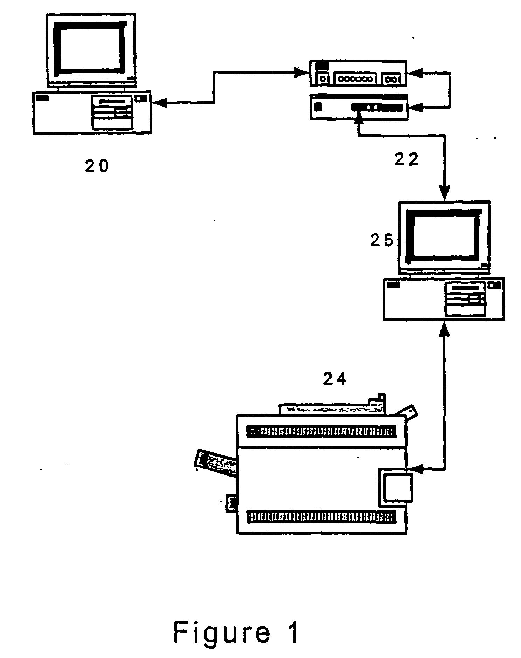

Figure 1 illustrates a typical arrangement of a network with printing facilities. A workstation 20 is connected to a hub and bridge combination 22 that in turn is connected to a printer device 24 through a print server 25. Applications on the workstation 20, such as a wordprocessor and drawing software can print documents on the printer device 24 by sending messages to the printer device 24. For the purpose of this example assume that the operating system at the workstation is Windows95 (trademark).

When the user at the workstation 20 desires to print, he or she invokes the print command under the application that has generated the document to be printed. Assume for the sake of this example that the document contains only typed text. The print command causes the appearance on the screen the dialog box illustrated in Figure 2. The user is required to enter some data and then to click the "Ok" button with a pointing device in order to complete the print function. When the user desires to print multiple specimens of the same document on the printer device 24 he or she must indicate the number of specimens desired in the "Number of copies" box. In addition the user checks or clears the "Collate" check box. In the situation where the user desires multiple specimens of a document to be printed and he or she has checked the "Collate" check box, the printer device 24 will generate the specimens in order. For example if the document has three pages, namely 1, 2 and 3 and two specimens must be printed, the printer device 24 output will be as follows; 1,2,3,1,2,3(the numerals indicate page numbers). On the other hand, when the check box "Collate" is cleared the output is as follows: 1,1,2,2,3,3(the numerals indicate page numbers). Evidently, the collate command is more practical since the multi-page documents are already in order in the printer device output bin.

The collate command is handled differently by each application and operating system of the workstation depending upon the type of printing device 24. The messages exchanged between the workstation 20 and collate capable printers have a structure of the type depicted in Figure 3. The message conveys document print information that encompasses two types of data, namely print data and printer commands. The print data 26 is the contents of the pages that will be printed while the printer commands 28 specify how the print data is to be handled by the printing device. When the user has specified that the printed documents are to be collated, the print data for every different page is sent only once and the collate command 28 is set to a value that determines how many times each page is to be reproduced. When the message is received at the printer device 24, the print data for each page is loaded in memory and the printing is done in a way to generate the documents collated.

When the printer is non-collate capable, the message structure depicted in Figure 4 is used. Here the print data 26 for the pages is repeated in the message the number of times the pages must be printed. In the case of a three page document to be printed in three copies, the print data is sent as 1,2,3,1,2,3,1,2,3 (the numerals indicate page numbers), where the print data for each page is repeated three times in the exact order in which the pages must be printed by the printer device 24. Note that the message structure depicted in Figure 4 also contains printer commands, but those have not been shown for the sake of clarity. In addition, it should be appreciated that the first data block 26 as it appears on the right of figure 4 contains information that is not necessarily duplicated in the subsequent blocks 26. For example a font descriptor is sent only once in connection with the first block 26 but does not need to be sent with the remaining blocks 26. In other words, recurring data blocks 26 in the signal that are associated to the same page of the document are not exactly identical bit by bit or byte by byte, although when printed each data block will generate the same page. Accordingly, for the purpose of this specification, the expression "recurring data blocks" should not be interpreted to mean that the data blocks are all absolutely identical. Rather, although the data blocks represent the same page of the document, the information in one data block associated with the page may vary slightly with relation to another data block associated with the same page. It should be noted that in Figures 3 and 4, the data blocks 26 represent individual pages.

It is apparent that collate capable printers are more efficient since the print data needs to sent only once.

When the user initiates a printing operation and clears the "Collate" check box, the structure of the message containing the document print information is similar to the structure depicted in Figure 3. The print data is sent only once along with a printer command to print each page a pre-determined number of times. In the case of a three-page document to be printed in three copies the output of the printer will be as follows: 1,1,1,2,2,2,3,3,3 where the numerals indicate page numbers. Each bock 26 in Figure 3 represents an individual page, in total there being three pages sent.

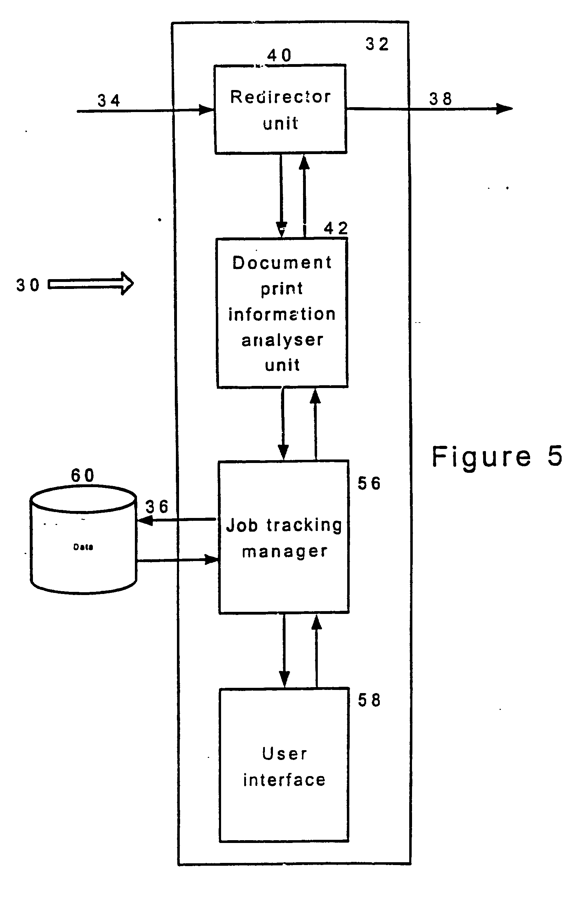

An example of implementation of the present invention is illustrated in Figure 5 in the form of an expense management system, in which the usage data representative of the usage of a printer device is employed for the purposes of billing. It should be expressly noted that applications where the printer usage data is employed for purposes other than billing are possible without departing from the spirit of the invention.

Figure 5 illustrates a functional block diagram of the expense management system. The expense management system identified by the reference numeral 30 includes a processing unit 32 having an input 34, a first output 36 and a second output 38. The input receives document print information of the type depicted in Figures 3 or 4. The first output 36 releases usage data in the form of billing data, and the second output 38 produces a control signal that enables the printing operation on the printer device 24 to proceed. Three specific and non-limiting examples can be presented in this regard. The billing data can be the number of pages for which an invoice will be prepared, the number of specimens for which an invoice will be prepared, currency information such as the amount the client is to be charged for usage of the printing device 24, or any other data falling into the broad definition of "usage data" given earlier in this specification. The "control signal" encompasses messages received or sent that result in the printer device 24 carrying out the printing operation.

The processing unit 32 comprises a redirector unit 40 whose basic task is to intervene between the application that is generating the document print information and the various software and/or hardware components of the workstation 20 and/or the network that carry out the printing operation. Basically, the redirector unit 40 operates in conjunction with the operating system of the workstation 20 such as to intercept messages exchanged between the application that is generating the document print information and the various components that carry out the printing operation. More particularly, a message sent by the application generating the document print information is actually intercepted by the redirector unit 40 at input 34, processed if necessary and then released at output 38. The redirector unit 40 acts in a transparent manner such that neither the application nor the various components that carry out the printing operation are aware of its presence.

Message and command redirector units are generally known in the art and it is not deemed necessary here to describe in detail the internal operation of this unit.

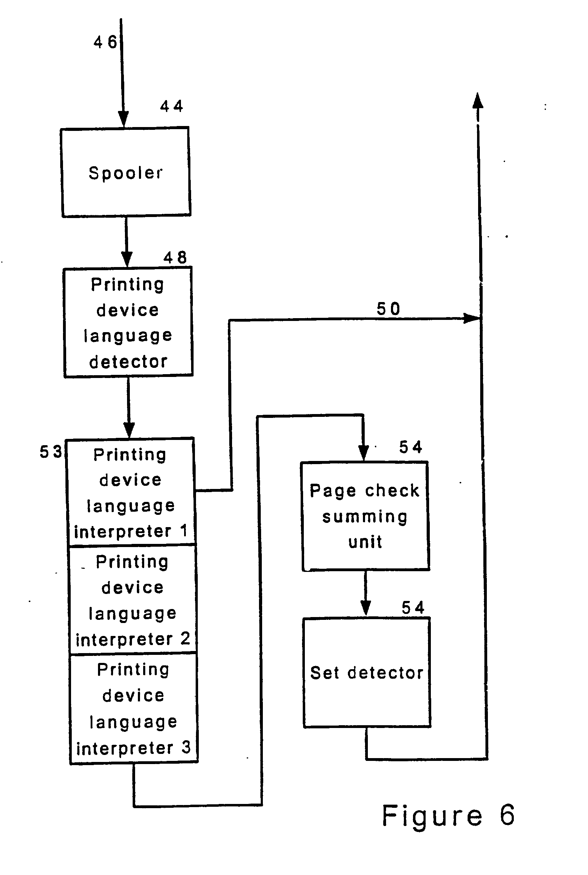

The processing unit 30 comprises a document print information analyzer unit 42 that is coupled to the redirector unit 40. The purpose of the document print information analyzer unit 42 is to analyze the document print information received at the input 34 so as to derive the number of document specimens that will be generated at the printer device 24. A more detailed functional block diagram of the document print information analyzer unit 42 is provided at Figure 6. The document print information analyzer unit 42 comprises a spooler 44 that receives at its input 46 document print information. The purpose of the spooler 44 is to accumulate all the document print information received from the application that attempts to print and accumulate it into a print job file.

The print job file is then passed to a printing device language detector 48 that attempts to determine in what language the document print information is communicated to the printing device 24. Printer language detection is achieved by sampling up to the first 32K bytes of printer commands and looking for unique comments and/or control codes to identify the language. A typical case is the PCL (trademark) (Print Control Language) V language in which the command ESC-E will follow an optional section for comments. When the particular language is identified, the printing device language detector 48 will pass the print job file to a printing device language interpreter 53. The printing device language interpreter 53 is actually a collection of individual interpreters, each interpreter being associated to a different language. When the printing device language detector 48 identifies the language of the document print information it activates the appropriate printing device language interpreter 53.

First, the printing device language interpreter 53 attempts to read two particular codes that might be present in the print job file, namely a collate command or a printer command to print each page a pre-determined number of times in a case multiple copies are desired but in a non-collate order. Recall that in those two circumstances, the print data is sent only once and the codes determine how many copies the printer will generate. Thus, to know the number of specimens to be printed it suffices to read the values at which those printer commands are set. The only exception is the situation where the commands are set to 0 or to 1 in which case further analysis needs to be performed since the print data may have been sent more than once. Note that these examples are non-limiting since the commands vary from one language to another.

In short, when a collate command or a printer command to print each page a pre-determined number of times are present and the values at which those commands are set are different from 0 or 1, the printing device language interpreter 53 reads the values associated with those commands and issues them thorough output 50.

If the print job file has no such explicit commands as to the number of document specimens to be generated by the printing device 24 the results of the interpretation of the print job file are passed to a page check summing unit 54. This unit implements a page check summing algorithm as follows (code written in ANSI C):

//CSUM is the check sum for the current page. It is initialized to 0 for each new page. CNT is the total number of characters for the current page and is initialized to 0 for each new page.

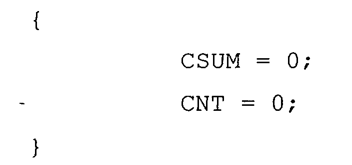

//For each new byte B, the following code block determines CSUM and CNT:

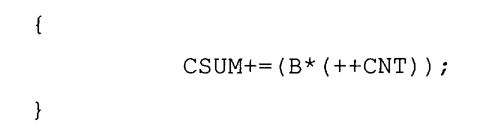

A data structure in the form of an array of SUM and CNT variables are held in memory for each page of the code sequence being analyzed.

The data structures are next passed to a set detector 54. Since the total number of pages to be printed is known, the CSUM and CNT array is used to test for pattern repetition in order to determine the number of specimens. The algorithm has a header and/or footer page compensation portion which attempts to perform the specimens detection algorithm described above on less than the total number of pages by either ignoring the beginning A or the trailing A pages. The variable A is programmable. The algorithm also contains comment detection, character descriptor exclusions, and font descriptor exclusions so identical pages will compare even if one page has extra comments or descriptors associated with it.

The algorithm is applied to any array containing 3 or more pages and is as follows:
1. Set Pages Per specimen = 1
2. Set Number of specimens = Total Pages divided by Pages Per specimen
3. Set a Flag to indicate that the Number of specimens is not proven
4. Test whether each page of each specimen matches with its corresponding page on the next specimen by comparing the CSUM and CNT variables of the appropriate pages. Assume that the 1^{st} page of the 1^{st} specimen always matches. Jump to 6 on the first mismatch
5. Set a Flag to indicate that the Number of specimens is proven and Quit
6. Increment Pages Per specimen
7. If Pages Per specimen is greater than ½ of the total pages then set Number of specimens = 1 and QUIT
8. If Pages Per specimen is not a factor of the total pages go to 6
9. Go to 4.

In the case of two copies of a one-page document sent as two pages, the algorithm will report 1 set. This case is highly unusual because most modern printers can generate non-collated copies of a document and most popular software programs, such as Microsoft Word trademark), will never send two copies of a single page document to a printer. It is much more efficient to send just a single copy of the page with an instruction to he printer to generate the additional copy.

Once the number of copies has been found, the results are passed out through the output 50.

Referring back to Figure 5, the signal conveying the number of specimens and the number of pages per specimen is input to the job tracking manager 56. The purpose of the job-tracking manager 56 is to use the number of specimens information and the number of pages per specimen information in order to generate the usage data. In particular, the usage data includes a result for the formula X - Y, where X is the number of specimens to be printed and Y is set as desired to any positive integer greater than 0. Although Y is typically set to 1, it can be set to any desired higher integer value, such as 2, 3 or 4.

Since, in this example, the usage data is used for billing purposes, the job-tracking manager 56 will first analyze expense allocation data such as the name or identifier of the client to whom the charge will be attributed, and/or details about the individual that has incurred the charge. In a specific non-limiting example, the expense allocation data is a combination of several data elements, namely:
5. User identification code;
6. User password
7. Name of client
8. Client matter

The operator enters the expense allocation data through an interface 58. A data capture dialog box or screen is created on the display of the workstation where the user is required to key in the data. Once the data entry process is completed, the job-tracking manager 56 will validate the expense allocation data. During the validation process the job-tracking manager 56 will query a database 60 to determine the information about the user identity, such as the user identification code and the user password are legitimate. In essence, these two elements are tested against a master list of user identification codes and corresponding passwords, that determines who is allowed to access and operate the system. Next the job-tracking manager 56 will perform a similar verification against the client information entered by the user, to determine if it is a valid client information. Finally, and optionally, the job-tracking manager 56 may create a record for the transaction, to be used for billing purposes.

The usage data in the form of billing data is determined by looking in the database for special instructions regarding the particular client, such as at what tariff the pages will be charged and also above what number of specimens (Y) the client will be charged. Once Y is known, the result of the formula X-Y may be calculated and the billing data generated accordingly, either in terms of number of pages to be billed, currency amount or any other appropriate format. In most instances the first specimen generated by the printing device 24 is considered an original and the client will be charged for each additional specimen. Assuming the special instructions regarding the particular client indicate that the client is to be charged for all pages being printed except the pages in the original, the billing data is generated on a basis of the formula (X - Y) * P, where Y=1 and the letter P designates the number of pages per specimen.

Another possibility is to ask for user validation first and then perform specimen number detection later.

If the job-tracking manager 56 validates the expense allocation data, the job tracking manager 56 causes a control signal to issue from output 38 that will effectively enable the printing device 24 to print the pages.

The following detailed examples will illustrate the events taking place during the operation of the expense management system, in which the usage data generated is in the form of billing data:

### a) A 32 bit Windows95 application or Windows95 print spooler printing a spool file with the expense management system resident

This section illustrates the major relationships between any 3rd party Windows95 32-bit application, the Windows95 Operating System and the expense management system components. This scenario illustrates what happens when a print job is initiated by a user from a typical 32 bit Windows95 Application that uses the built in the direct printing of a Raw Printer Data or Spool File methods provided by the Windows95 Application Programming Interface (API).

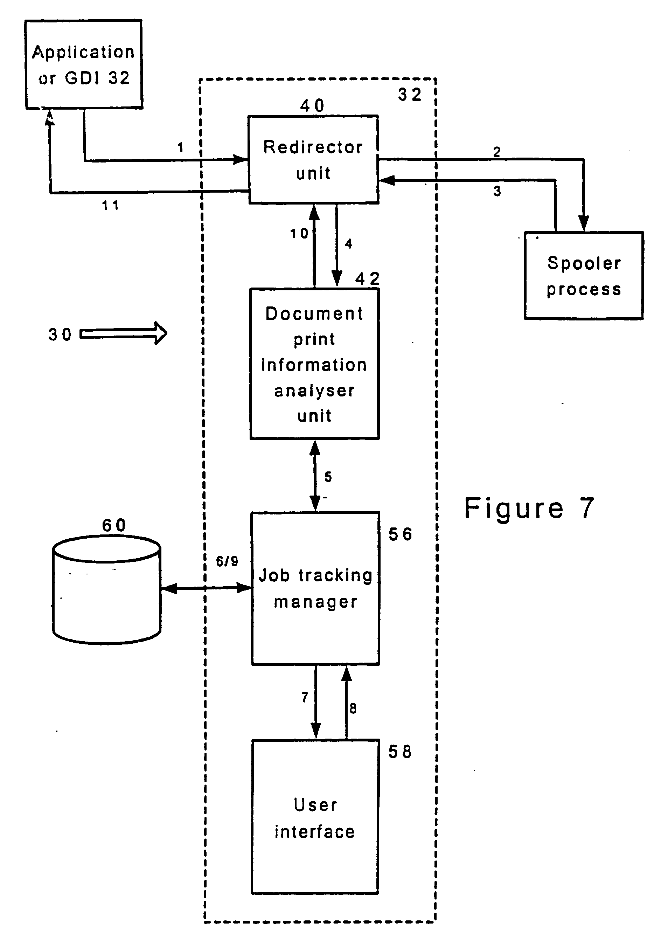

The scenario presented at Figure 7 walks through the sequence of calls between the application and the Windows95 Operating System.

The illustration at Figure 7 shows the sequence of calls and events that start with the application or Windows95 de-spooler initiating a print job. This step is labeled 1 in Figure 7 and the final step, when the expense management system has finished processing the request is labeled step 14. Note that between steps 2 and 3 there are many other Windows95 Print Components, which come into play but those, have not been described in the interest of clarity.

Each of the following paragraphs describes one of the calls between the 3rd party application or Windows95 de-spooler, the expense management system and the Windows95 O/S during the process of printing.
1. The application or Windows95 Graphical Display Interface (GDI) 32-bit (As part of the de-spooling process) has either RAW (the file contains the real instructions for the printer) or EMF(Enhanced -Meta File) printer data to send to a printer. The application or Windows95 GDI 32-bit use the StartDocPrinter function to initiate a print request for the printer.
2. The redirector unit 40 intercepts the spooler calls from the application or GDI 32-bit and creates memory objects containing information about the calls. It then makes the call to the spooler as the source so that the spooler will return the results of the call back to it.
3. Depending on the type of printing (RAW spooling or EMF spooling), the spooler will have passed on commands to the appropriate printer components of the Windows95 O/S and return a result set back to the redirector unit 40.
4. Based on the spooler call type, source parameters, and result parameters, the redirector unit 40 packages the print job data and sends it to the document print information analyzer unit 42.
5. The document print information analyzer unit 42 is responsible for detecting the start of a new job, end of a job, and calculating the number of pages, copies and other tracking variables from the printer data. Whenever a new job begins, terminates or a tracking variable changes, the document print information analyzer unit 42 forwards the data via an interprocess call to the job tracking manager 56.
6. The job-tracking manager 56 updates the database 60 every time a print job for which a record needs to be logged is completed.
7. The job tracking manager sends a request to the user interface 58 to capture the cost recovery information that is to be associated with the print job. The user interface 58 is responsible for capturing cost recovery variables such as the user's identification number, client and matter numbers or codes, job descriptions and billing codes.
8. The user interface 58 sends cost recovery information back to the job tracking manager 56.
9. The job tracking manager 56 associates the cost recovery information with the proper print job and issues the billing data that is recorded in the database 60.
10. The document print information analyzer unit 42 reports back to the redirector unit 40 that the expense management system has now fully processed the spooler call.
11. The redirector unit 40 returns the spooler result set back to the originating 3rd party application or GDI 32-bit as if the call was processed directly by Windows95 itself.

### b) A 32 bit Windows95 application printing with the expense management system resident

This section illustrates the major relationships between any 3rd party Windows95 32-bit application, the Windows95 operating system and the expense management system components. This scenario illustrates what happens when a print job is initiated by a user from a typical 32-bit Windows95 application that uses the built in GDI print methods provided by the Windows95 API, irregardless of whether the job is to be printed directly or spooled by the operating system.

The presented scenario walks through the sequence of calls between the application and the Windows95 operating system.

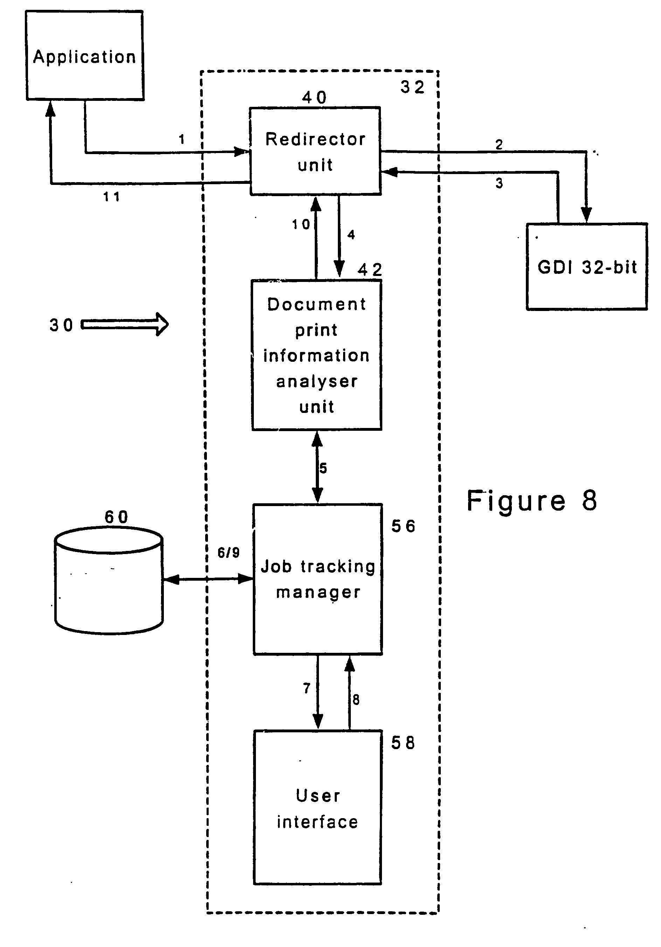

The illustration at Figure 8 shows the sequence of calls and events that start with the application initiating a print job. This step is labeled 1 in Figure 8 and the final step, when the expense management system has finished processing the request is labeled step 11. Note that between steps 2 and 3 there are many other Windows95 print components that come into play and have not been described in the interest of clarity.
1. The application has a graphics object, for example a circle, to send to a printer. The application creates a Device Context (DC) and calls the GDI StartDoc function to initiate a print request for the printer. This request may also contain a file name if the application wants to print directly to a file.
2. The redirector unit 40 intercepts the GDI calls from the application and creates memory objects containing information about the calls. It then makes the call to the GDI as the source so that the GDI will return the results of the call back to it.
3. Depending on the type of printing (Direct, RAW spooling or EMF spooling), the GDI will have passed on commands to the appropriate printer components of the Windows95 operating system and return a result set back to the redirector unit 40.
4. Based on the GDI call type, source parameters, and result parameters, the redirector unit 40 packages the print job data and sends it to the document print information analyzer unit 42.
5. The document print information analyzer unit 42 is responsible for detection the start of a new job, end of a job, and calculating the number of pages, copies and other tracking variables from the printer data. Whenever a new job begins, terminates or a tracking variable changes, the document print information analyzer unit 42 forwards the data via an interprocess call to the job tracking manager 56.
6. The job-tracking manager 56 updates the database 60 every time a print job for which a record needs to be logged is completed.
7. The job tracking manager sends a request to the user interface 58 to capture the cost recovery information that is to be associated with the print job. The user interface 58 is responsible for capturing cost recovery variables such as the user's identification number, client and matter numbers or codes, job descriptions and billing codes.
8. The user interface 58 sends cost recovery information back to the job tracking manager 56.
9. The job tracking manager 56 associates the cost recovery information with the proper print job and issues the billing data that is recorded in the database 60.
10. The document print information analyzer unit 42 reports back to the redirector unit 40 that the expense management system has now fully processed the GDI call.
11. The redirector unit 40 returns the GDI result set back to the originating 3rd party application or GDI 32-bit as if the call was processed directly by Windows95 itself.

### c) A 16 bit application running on a Windows95 operating system printing with the expense management system resident

This section illustrates the major relationships between any 3rd party 16-bit application running on the Windows95 operating system, the Windows95 operating system and the expense management system components. This scenario illustrates what happens when a print job is initiated by a user from a typical 16-bit application that uses the built in GDI print methods provided by the Windows API, irregardless of whether the job is to be printed directly or spooled by the operating system.

The presented scenario walks through the sequence of calls between the application and the Windows95 operating system.

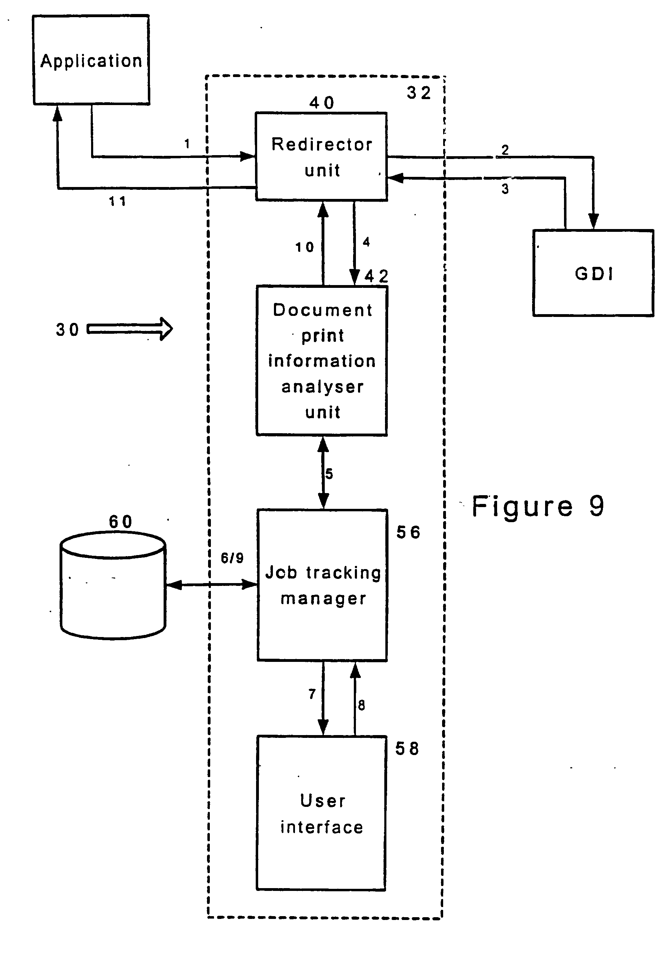

The illustration at Figure 9 shows the sequence of calls and events that start with the application initiating a print job. This step is labeled 1 in Figure 8 and the final step, when the expense management system has finished processing the request is labeled step 11. Note that between steps 2 and 3 there are many other Windows95 print components which come into play and have not been described in the interest of clarity.
1. The application has a graphics object, for example a circle, to send to a printer. The application creates a Device Context (DC) and calls the GDI StartDoc function to initiate a print request for the printer. This request may also contain a file name if the application wants to print directly to a file.
2. The redirector unit 40 intercepts the GDI calls from the application and creates memory objects containing information about the calls. It then makes the call to the GDI as the source so that the GDI will return the results of the call back to it.
3. Depending on the type of printing (Direct, RAW spooling or EMF spooling), the GDI will have passed on commands to the appropriate printer components of the Windows95 operating system and return a result set back to the redirector unit 40.
4. Based on the GDI call type, source parameters, and result parameters, the redirector unit 40 packages the print job data and sends it to the document print information analyzer unit 42.
5. The document print information analyzer unit 42 is responsible for detection the start of a new job, end of a job, and calculating the number of pages, copies and other tracking variables from the printer data. Whenever a new job begins, terminates or a tracking variable changes, the document print information analyzer unit 42 forwards the data via an interprocess call to the job tracking manager 56.
6. The job-tracking manager 56 updates the database 60 every time a print job for which a record needs to be logged is completed.
7. The job tracking manager sends a request to the user interface 58 to capture the cost recovery information that is to be associated with the print job. The user interface 58 is responsible for capturing cost recovery variables such as the user's identification number, client and matter numbers or codes, job descriptions and billing codes.
8. The user interface 58 sends cost recovery information back to the job tracking manager 56.
9. The job-tracking manager 56 associates the cost recovery information with the proper print job and issues the billing data that is recorded in the database 60.
10. The document print information analyzer unit 42 reports back to the redirector unit 40 that the expense management system has now fully processed the GDI call.
11. The redirector unit 40 returns the GDI result set back to the originating 3rd party application or GDI 32-bit as if the call was processed directly by Windows95 itself.

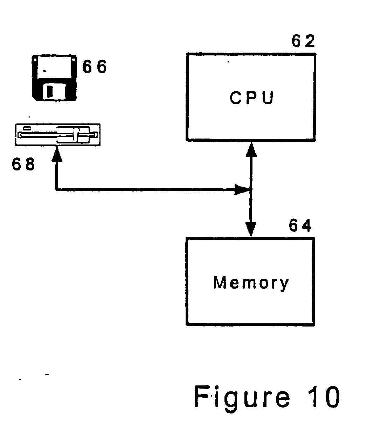

As previously mentioned, the expense management system is software implemented on a computing platform, such as the workstation 20 and alternatively the print server 25. The basic structure of the computing device constituting the workstation is depicted in Figure 10. The computing device has a Central Processing Unit (CPU) 62, a memory 64 and a bus connecting the CPU 62 to the memory 64. The memory 64 holds program instructions for execution by the CPU 62 to implement the functionality of the expense management system. Externally of the computing device the expense management system is stored on a computer readable medium 66, such as a floppy disk. The floppy disk can be read by a floppy drive 68 to load the program instructions in the memory 64. The computer readable medium may be part of a remote computing platform connected to the computing platform that executes the program, in some way such as to allow the data transfer necessary to pass the program element to the computing platform on which the execution will be made. For example, a file server containing the program element that can be accessed by any suitable connection to obtain the program elements by another computing platform is considered to contain a computer readable medium with the program element.

Note that in an alternative example of implementation, the usage data that is generated on a basis of the X-Y formula may be used for purposes other than the actual generation of billing data. Examples of such alternative uses include using the usage data for:
- performing printer device usage analysis;
- activating or de-activating the generation of billing data (that is, determining whether or not a client is to be billed for a print job);
- activating or de-activating the storage of billing data;
- among other examples.

In such cases, once the usage data is computed, the usage data is released from the processing unit for any further processing, if such processing is required.

It is intended for the present application to cover the modifications and variations of this invention provided that they come within the scope of the appended claims and their equivalents.

## Claims

1. A system for generating data on a usage of a printer device, comprising:
a) an input for receiving an input signal representative of a number of specimens of a document a user desires to generate on a printer device;
b) a processing unit coupled to said input, said processing unit being operative to:
i) determine from the input signal a value X indicative of a number of specimens of the document to be generated by the printer device;
ii) compute usage data at least on a basis of X - Y, where Y is a positive integer greater than zero;
iii) release the usage data.

2. A system as defined in claim 1, wherein the input signal contains document print information.

3. A system as defined in claim 2, wherein said processing unit is operative to derive from the input signal the value X.

4. A system as defined in claim 1, wherein the usage data is suitable for billing for the usage of the printer device.

5. A system as defined in claim 4, wherein the usage data conveys a number of pages printed for which a client is to be invoiced.

6. A system as defined in claim 4, wherein the usage data conveys a currency value.

7. A system as defined in claim 1, wherein the usage data is computed at least in part on the basis of (X-Y)*P where P represents the number of pages per document specimen.

8. A system as defined in claim 2, wherein the input signal is free of a printer instruction directing a printer to generate collated specimens of a document.

9. A system as defined in claim 2, wherein the input signal includes a printer instruction that conveys a collate command, the collate command being set to a value selected in the group consisting of nil and 1.

10. A system as defined in claim 1, wherein said output is a first output, said system including a second output for generating a control signal operative to selectively enable the printer device to print.

11. A system as defined in claim 10, wherein the usage data is suitable for billing for the usage of the printer device, said processing unit includes a user interface permitting a user to enter expense allocation data, said processing unit being operative to attempt validating the expense allocation data, if the expense allocation data is validated said processing unit being operative to generate said control signal.

12. An expense management system as defined in claim 2, wherein said processing unit includes a document print information analysis unit operative to spool the document print information in the input signal into a spool file.

13. A system as defined in claim 12, wherein the spool file contains a succession of printer commands, said document print information analysis unit being operative to observe the succession of printer commands and to derive the value X indicative of a number of specimens of the document that would be printed if the spool file is de-spooled to the printer device.

14. A machine readable storage medium containing program instructions for execution on a computing device to implement a system for generating data on a usage of a printer device, comprising:
a) an input for receiving an input signal representative of a number of specimens of a document a user desires to generate on a printer device;
b) a processing unit coupled to said input, said processing unit being operative for:
i) generating from said input signal a value X indicative of a number of specimens of the document to be generated by the printer device;
ii) computing usage data at least on a basis of X - Y, where Y is a positive integer greater than zero;
iii) releasing the usage data.

15. A machine readable storage medium as defined in claim 14, wherein the usage data is suitable for billing for the usage of the printer device.

16. A machine readable storage medium as defined in claim 15, wherein the input signal contains document print information.

17. A machine readable storage medium as defined in claim 16, wherein the usage data conveys a number of the pages and for which a client is to be invoiced.

18. A machine readable storage medium as defined in claim 17, wherein the usage data is computed at least on that the basis of (X-Y)*P where P represents the number of pages per document specimen.

19. A machine readable storage medium as defined in claim 18, wherein the usage data conveys a currency value.

20. A machine readable storage medium as defined in claim 19, wherein the input signal is free of an instruction directing the printer device to print collated specimens of a document.

21. A machine readable storage medium as defined in claim 15, wherein the input signal conveys a collate command, the collate command being set to a value selected in the group consisting of nil and 1.

22. A machine readable storage medium as defined in claim 14, said processing unit further operative for generating a control signal operative to selectively enable the printer device to print when receiving the document print information.

23. A machine readable storage medium as defined in claim 22, wherein said processing unit includes a user interface permitting a user to enter expense allocation data, said processing unit being operative to attempt validating the expense allocation data, if the expense allocation data is validated said processing unit being operative to generate said control signal.

24. A machine readable storage medium as defined in claim 14 wherein said processing unit includes a document print information analysis unit operative to spool the document print information in the input signal into a spool file.

25. A machine readable storage medium as defined in claim 24, wherein the spool file contains a succession of printer commands, said document print information analysis unit being operative to observe the succession of printer commands and to derive the value X indicative of a number of specimens of the document that would be printed if the spool file is de-spooled to the printer device.

26. A print data processing device, comprising:
a) an input for receiving an input signal containing print data, the print data being suitable for processing by a printer device to cause the printing device to print X specimens of a document, the print data including data blocks associated to respective pages of the document, the data blocks recurring in the input signal;
b) a print data analysis unit coupled to said input, said print data analysis unit being operative for deriving from said input signal the value X;
c) an output coupled to said print data analysis unit for releasing data conveying the value X.

27. A print data processing device as defined in claim 26, wherein the document is a multi-page document.

28. A print data processing device as defined in claim 27, where the data blocks recur in the input signal X times.

29. A print data processing device as defined in claim 28, wherein the print data corresponds in a printed format to a document having N pages, said print data analysis unit being operative to process the print data to generate a data structure for each page of at least some of the N pages.

30. A print data processing device as defined in claim 29, wherein the data structure for a certain page of the document of N pages constitutes an identifier of the certain page.

31. A print data processing device as defined in claim 30, wherein said print data analysis unit is operative to process the data structures generated for at least some of the N pages to derive the value X.

32. A print data processing device as defined in claim 31, wherein said print data analysis unit is operative to compare the data structures generated for at least some of the N pages to one another to derive the value X.

33. A machine readable storage medium containing program instructions for execution on a computing device to implement a print data processing device, comprising:
a) an input for receiving an input signal containing print data, the print data being suitable for processing by a printer device to cause the printing device to print X specimens of a document, the print data including data blocks associated to respective pages of the document, the data blocks recurring in the input signal;
b) a print data analysis unit coupled to said input, said processing unit being operative for deriving from said input signal the value X;
c) said print data analysis unit being operative for releasing data conveying the value X.

34. A machine readable storage medium as defined in claim 33, wherein the document is a multi-page document.

35. A machine readable storage medium as defined in claim 34, where the data blocks recur in the input signal X times.

36. A machine readable storage medium as defined in claim 35, wherein the print data corresponds in a printed format to a document having N pages, said print data analysis unit being operative to process the print data to generate a data structure for each page for at least some of the N pages.

37. An machine readable storage medium as defined in claim 36, wherein the data structure for a certain page of the document of N pages constitutes an identifier of the certain page.

38. A machine readable storage medium as defined in claim 37, wherein said print data analysis unit is operative to process the data structures generated for at least some of the N pages to derive the value X.

39. A machine readable storage medium as defined in claim 38, wherein said print data analysis unit is operative to compare the data structures generated for at least some of the N pages to one another to derive the value X.
